# EUROPEAN PATENT SPECIFICATION

(11) **EP 3 918 906 B1**
(45) Date of publication and mention of the grant of the patent: **10.01.2024**
(21) Application number: 21173994.1
(22) Date of filing: 17.05.2021
(51) Int. Cl.: A01F 15/04, A01F 15/07

(54) **BALER IMPLEMENT WITH INTEGRATED WRAP SYSTEM**
BALLENPRESSENGERÄT MIT INTEGRIERTEM WICKELSYSTEM
OUTIL DE RAMASSEUSE-PRESSE COMPRENANT UN SYSTÈME D'EMBALLAGE INTÉGRÉ

(30) Priority: 02.06.2020 US 202016890147
(43) Date of publication of application: 08.12.2021
(73) Proprietor: Deere & Company, Moline, IL 61265 (US)
(72) Inventor: JAWALE, VINIT, 68163 Mannheim (DE); MAHAJAN, SANDEEP, 68163 Mannheim (DE); KHADASARE, SANTOSH, 68163 Mannheim (DE); KULKARNI, NIKHIL, 68163 Mannheim (DE); HEMANT, KADAM T, 68163 Mannheim (DE)
(74) Representative: Stein, Stefan

(56) References cited:
- WO-A1-2011/142660
- DE-A1- 4 037 533
- US-A1- 2019 069 492

## Description

### TECHNICAL FIELD

The disclosure generally relates to a baler implement with an integrated wrap system

### BACKGROUND

Baler implements gather cut crop material and form the crop material into a bale. Generally, the bales may include either round cylindrical shape or a parallelepiped shape, e.g., a rectangular shape. The size of the bales may also vary. For example, the dimensions of a large parallelepiped shaped bale, commonly referred to as a "large square bale" may include end face dimensions between, for example, 3 and 5 feet (i.e., approximately 1.0 and 1.6 meters), and length dimensions between, for example, 4 and 9 feet (i.e., approximately 1.3 and 3.0 meters). In certain circumstances, it is desirable to wrap the bale in a wrap material. For example, in some circumstances, the bale may be completely wrapped in a plastic sheet.

Traditionally, operators wishing to wrap large square bales have formed the bales in the baler implement, bound the formed bales inside the baler implement, and then dropped the formed bales on the ground. After the formed bales have been deposited on the ground, a tractor pulling a separate wrapping implement picks up the large square bale and wraps the large square bale with plastic wrap material. This is an additional step which adds to the time to complete the bale. Additionally, traditional wrapping implements typically rotate or tumble the bale in three dimensions to ensure that all portions of the bale faces are completely covered. Therefore, traditional square bale wrapping implements have practical limits on the length of the large square bales that may be processed reliably. Generally, in some background prior art, these types of wrapping implements are limited to large square bales having a maximum size or maximum length, for example, approximately 5 feet (i.e., approximately 1.6 meters). DE 40 37 533 A1 discloses a baler comprising two winder units a horizontal and a vertical coil winder with two axles behind each other in the direction of travel. One coil-winder is incorporated on the baling-press. US 2019/0069492 A1 discloses a combination of a baling and wrapping machine. WO 2011/142660 A1 discloses a device for wrapping a film round a bale of mowed material.

### SUMMARY

The above-mentioned drawbacks are overcome by a first aspect of the present invention with a crop baler implement as set forth in independent claim 1. The crop baler implement includes a frame extending along a longitudinal frame axis. A baling chamber is attached to the frame. The baling chamber is sized to form crop material into a bale having a parallelepiped shape extending along a central longitudinal bale axis and having a transverse bale axis that is perpendicular to the central longitudinal bale axis. A carriage is coupled to the frame rearward of the baling chamber. The carriage includes a tray positioned to receive the bale from the baling chamber in a first orientation. The tray is rotatable relative to the carriage about a substantially vertical tray axis to move the bale from the first orientation to a second orientation. When the bale is disposed in the first orientation, the bale is positioned such that the central longitudinal bale axis is generally parallel with the longitudinal frame axis. When the bale is disposed in the second orientation, the bale is positioned such that the transverse bale axis is generally parallel with the longitudinal frame axis.

In one aspect of the disclosure, an actuator may interconnect the tray and the carriage. The actuator is operable to rotate the tray about the vertical tray axis relative to the carriage. The actuator may include, but is not limited to, an electric motor, a hydraulic motor, a gear train driven by a rotational input, etc.

According to the invention, a transverse wrapping assembly is attached to the carriage. The transverse wrapping assembly is moveable along a path surrounding the tray. The transverse wrapping assembly includes transverse face wrap roller moveable in an endless loop encircling the tray when the bale is disposed in the second orientation. The transverse wrapping assembly may wrap the end faces of the bale.

According to the invention, a longitudinal wrapping assembly is coupled to the frame, between the tray and the baling chamber. The longitudinal wrapping assembly includes longitudinal face wrap roller that is moveable in an endless loop encircling the bale when the bale is disposed in the first orientation. The longitudinal wrapping assembly may wrap the longitudinal faces of the bale. Thereby, since combined with the transverse wrapping assembly, all faces of the parallelepiped shape bale are wrapped with the wrapping material.

In one aspect of the disclosure, the bale includes a left side face, a right side face, a top face, a bottom face, a forward end face, and a rearward end face. Each of the left side face, the right side face, the top face, and the bottom face are disposed substantially parallel with the central longitudinal bale axis. Each of the forward end face and the rearward end face are disposed substantially parallel to the transverse bale axis. The longitudinal face wrap roller is operable to hold a roll of wrap material and wrap the left side face, the right side face, the top face, and the bottom face of the bale with the wrap material as the longitudinal face wrap roller moves in the endless loop around the bale. The transverse face wrap roller is operable to hold a roll of wrap material and wrap the forward end face and the rearward end face of the bale with the wrap material as the transverse face wrap roller moves around the tray.

In one aspect of the disclosure, the tray includes a central portion concentrically located about the vertical tray axis. The central portion may include a plurality of omni-direction rollers operable to guide the bale along both a first path and a second path. The second path may be disposed perpendicular to the first path.

In one aspect of the disclosure, the central portion defines a square shape. The tray may include a first wing portion and a second wing portion extending from and coplanar with the central portion. The first wing portion and the second wing portion are disposed opposite each other, and may cooperate with the central portion to define the first path. The tray may further include a third wing portion and a fourth wing portion extending from and coplanar with the central portion. The third wing portion and the fourth wing portion may be disposed opposite each other and may cooperate with the central portion to define the second path.

In one aspect of the disclosure, the carriage includes an arm supporting the transverse face wrap roller. The arm is rotatably attached to the carriage for rotation about the vertical tray axis. The arm moves independent of and relative to the tray about the vertical tray axis. The carriage may further include a rotational drive interconnecting the arm and the carriage. The rotational drive is operable to move the arm about the vertical tray axis relative to the carriage. The rotational drive may include, but is not limited to, an electric motor, a hydraulic motor, a gear train driven by a rotational input, etc.

In accordance with a second aspect of the present invention, a method of baling crop material with the features of claim 13 is provided.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view of a baler implement.
FIG. 2 is a schematic perspective view of a bale.
FIG. 3 is a schematic side view of the baler implement.
FIG. 4 is a schematic perspective view from above of a carriage of the baler implement.
FIG. 5 is a schematic plan view of the carriage.
FIG. 6 is a schematic elevation view of the carriage.
FIG. 7 is a schematic perspective view of a bale on the carriage in a first orientation.
FIG. 8 is a schematic perspective view of the bale on the carriage in a second orientation.
FIG. 9 is a schematic elevation view showing a second bale discharging the initial bale from the carriage.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

Referring to the Figures, wherein like numerals indicate like parts throughout the several views, a crop baler implement is generally shown at 20. The crop baler implement 20 shown in the Figures and described herein is embodied as a large square baler. However, it should be appreciated that that the teachings of this disclosure may be applied to other types and configurations of the crop baler implement 20.

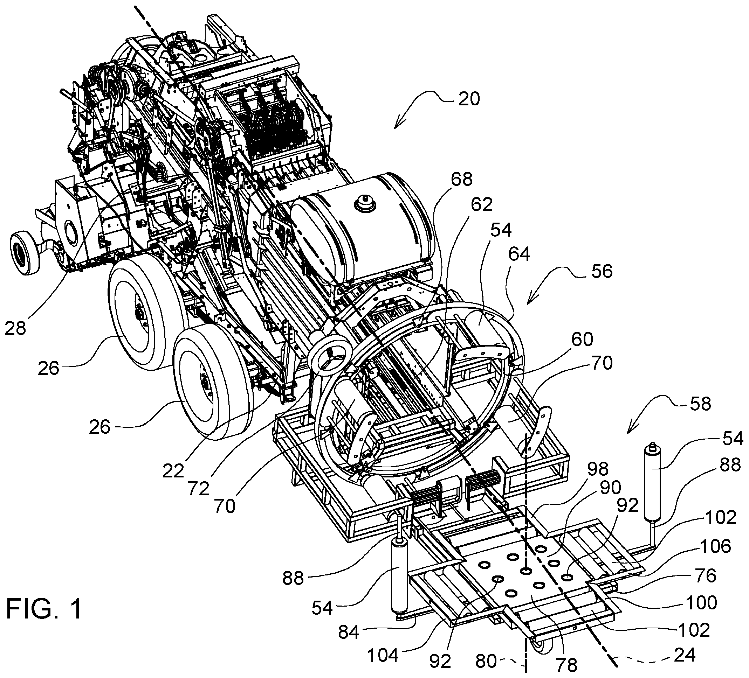

Referring to FIG. 1, and as is understood by those skilled in the art, the crop baler implement 20 includes a frame 22. The frame 22 extends along a longitudinal frame axis 24, between a forward end and a rearward end of the crop baler implement 20 relative to a direction of travel of the crop baler implement 20. The frame 22 supports ground engaging elements 26, e.g., wheels or tracks. The frame 22 further includes and/or supports a baling chamber 28.

The crop baler implement 20 gathers cut crop material and moves the crop material into the baling chamber 28 with a feed system (not shown). The baling chamber 28 is attached to the frame 22 and includes walls sized to form crop material into a bale 30. A plunger (not shown) compresses the crop material into a flake. The process is repeated with each flake adding to a length 32 of the bale 30. When the bale 30 reaches a desired length 32, measured along a central longitudinal bale axis 34 of the bale 30, a knotter system (not shown) ties a twine, cord, binding material, or other suitable wrapping material around the bale 30 to secure the flakes together and form the bale 30. The baling chamber 28 forms the bale 30 to have a parallelepiped shape extending along the central longitudinal bale axis 34 and having a transverse bale axis 36 perpendicular to the central longitudinal bale axis 34. The parallelepiped shape of the bale 30 is commonly referred to as a rectangular bale 30, a square bale 30, or a large square bale 30.

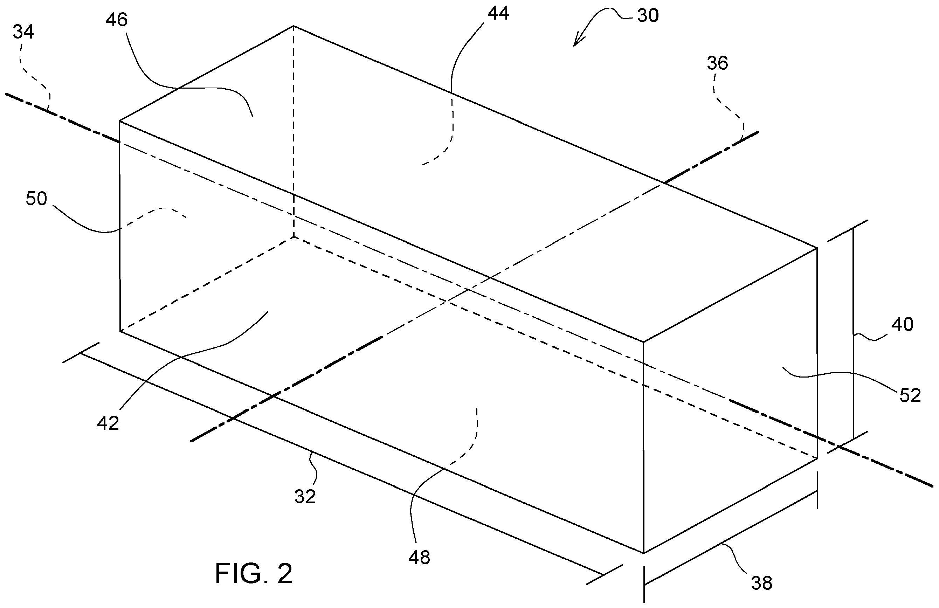

Typically, referring to FIG. 2, the bale 30 has a width 38 approximately equal to three or four feet (i.e., approximately 1.0 or 1.3 meters), a height 40 approximately equal to three or four feet (i.e., approximately 1.0 or 1.3 meters), and the length 32 that may vary between approximately four to eight feet (i.e., approximately 1.3 or 2.6 meters). It should be appreciated that the dimensions of the bale 30 formed by the example implementation of the crop baler implement 20 may vary from the example dimensions described above. The operations of the crop baler implement 20 used for processing the bale 30, beyond the basic formation of the bale 30 that are unique to the disclosure are discussed herein.

As shown in FIG. 2, the parallelepiped shape of the bale 30 formed by the example implementation of the crop baler implement 20 described herein includes a left side face 42, a right side face 44, a top face 46, a bottom face 48, a forward end face 50, and a rearward end face 52. Each of the left side face 42, the right side face 44, the top face 46, and the bottom face 48 extend along and are disposed substantially parallel with the central longitudinal bale axis 34, and may be referred to as longitudinal faces of the bale 30. Each of the forward end face 50 and the rearward end face 52 are disposed substantially parallel to the transverse bale axis 36, i.e., perpendicular or transverse to the central longitudinal bale axis 34, and may be referred to as transverse faces of the bale 30.

Certain crops and/or crops having a certain moisture content, e.g., silage, may need to be wrapped with a wrap material 54, such as but not limited to a solid plastic wrap, to completely enclose the bale 30 in a substantially air tight wrapping. In other embodiments, the bales 30 may be wrapped with twine, cord, binding material, a water permeable material, a water semi-permeable material, a non-solid net-type material, etc., to allow the harvested crop to breath or dry to a desired moisture level and to inhibit mold formation. In order to wrap the bales 30 with the wrap material 54, the crop baler implement 20 is equipped with a wrap system. Referring to FIG. 1, the wrap system may include, for example, a longitudinal wrapping assembly for wrapping the longitudinal faces of the bale 30, and a transverse wrapping assembly for wrapping the transverse faces of the bale 30.

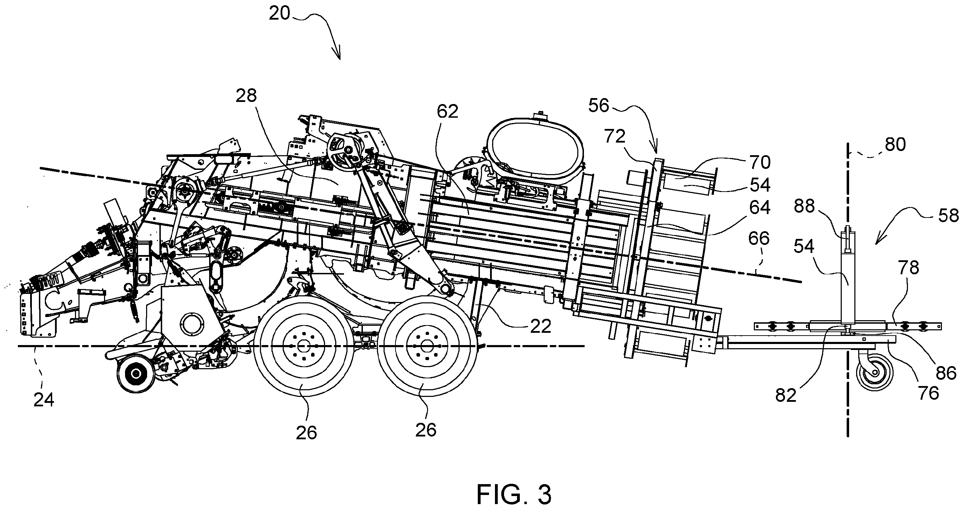

Referring to FIGS. 1 and 3, the longitudinal wrapping assembly is configured to wrap the longitudinal faces of the bale 30, i.e., left side face 42, the right side face 44, the top face 46, and the bottom face 48. The longitudinal wrapping assembly includes a fixed support 60 attached to the frame 22. In the example embodiment shown in the Figures, the frame 22 includes a bale chute 62, with the fixed support 60 attached to the bale chute 62. However, it should be appreciated that the fixed support 60 may be attached to the frame 22 in some other manner. The fixed support 60 includes an annular or circular shape that encircles the bale 30 as the bale 30 is discharged from the baling chamber 28 in a first orientation, on the bale chute 62. As such, the fixed support 60 is disposed rearward of the baling chamber 28. The first orientation includes the bale 30 positioned such that the central longitudinal bale axis 34 is generally parallel with the longitudinal frame axis 24.

The fixed support 60 rotatably supports an orbital support 64. The orbital support 64 is rotatable about a wrap axis 66, and is moveable about the wrap axis 66 relative to the fixed support 60. The orbital support 64 defines an open central region and is positioned to receive the bale 30 in the first orientation from the baling chamber 28 and pass the bale 30 through the open central region of the orbital support 64. The orbital support 64 may include an annular or circular shape that encircles the bale 30 as the bale 30 is discharged from the baling chamber 28, on the bale chute 62.

The longitudinal wrapping assembly further includes a plurality of rollers 68 interconnecting the orbital support 64 and the fixed support 60. The rollers 68 allow rotation of the orbital support 64 relative to the fixed support 60. As such, the shape of the fixed support 60 generally defines an endless loop or iterative rotations forming a circular path that the orbital support 64 follows, as the orbital support 64 moves about the wrap axis 66 relative to the fixed support 60.

At least one longitudinal face wrap roller 70 is attached to and moveable with the orbital support 64. The longitudinal face wrap roller 70 is moveable in the endless loop along the circular path encircling the bale 30 as the bale 30 is ejected from the baling chamber 28 and moved down the bale chute 62 in the first orientation. The longitudinal face wrap roller 70 is operable to hold a roll of wrap material 54 and dispense the wrap material 54 to wrap the longitudinal faces of the bale 30 with the wrap material 54, i.e., the left side face 42, the right side face 44, the top face 46, and the bottom face 48, as the longitudinal face wrap roller 70 moves in the endless loop along the circular path and around the bale 30.

A drive 72 is coupled to the orbital support 64. The drive 72 is operable to rotate the orbital support 64 and the wrap roller about the wrap axis 66 to wrap the wrap material 54 around the bale 30 as the bale 30 moves through the open central region of the orbital support 64. The drive 72 may include any device and/or system capable of rotating the orbital support 64 relative to the fixed support 60. In the example embodiment shown in the Figures and described herein, the drive 72 includes a motor, for example an electric motor, hydraulic motor or other rotational energy source, that rotates a wheel. Frictional engagement between the wheel and the orbital support 64 causes the orbital support 64 to rotate about the wrap axis 66 relative to the fixed support 60. The motor may include, but is not limited to, an electric motor, a hydraulic motor, or some other type of device capable of rotating the wheel. It should be appreciated that the drive 72 may include some other device not described or shown herein that is capable of rotating the orbital support 64 relative to the fixed support 60.

The longitudinal face wrap roller 70 may further include a wrap cutter 74 attached to and moveable with the orbital support 64. The wrap cutter 74 is disposed adjacent to the longitudinal face wrap roller 70, and is operable to secure and cut the wrap material 54 dispensed from the longitudinal face wrap roller 70.

Referring to FIGS. 1 and 3, in the implementation of the baler implement 20 described herein the transverse wrapping assembly is configured to wrap the transverse faces of the bale 30, i.e., the forward end face 50 and the rearward end face 52, after the longitudinal wrapping assembly has finished wrapping the longitudinal faces of the bale 30. However, it should be appreciated that the process may be reversed from that described herein, in which the transverse wrapping assembly wraps the end faces of the bale 30 first, and then the longitudinal wrapping assembly wraps the longitudinal faces of the bale 30.

In the example implementation of the baler implement 20 described herein, the transverse wrapping assembly is attached to and supported on a carriage 76. The carriage 76 is coupled to the frame 22 rearward of the baling chamber 28. More particularly, in the example implementation, the transverse wrapping assembly is disposed rearward of the longitudinal wrapping assembly relative to a direction of travel of the baler implement 20. As such, the longitudinal wrapping assembly is positioned between the baling chamber 28 and the carriage 76.

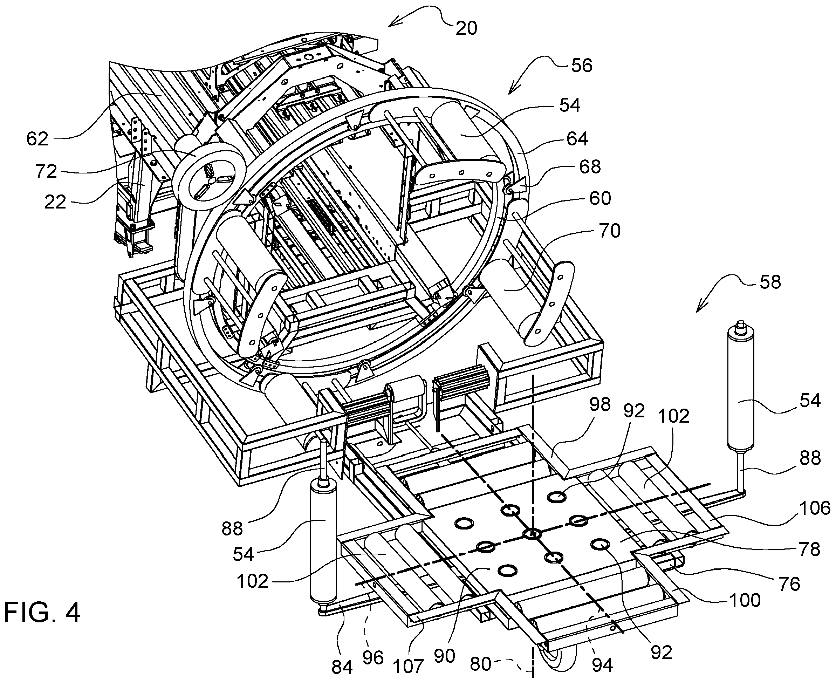

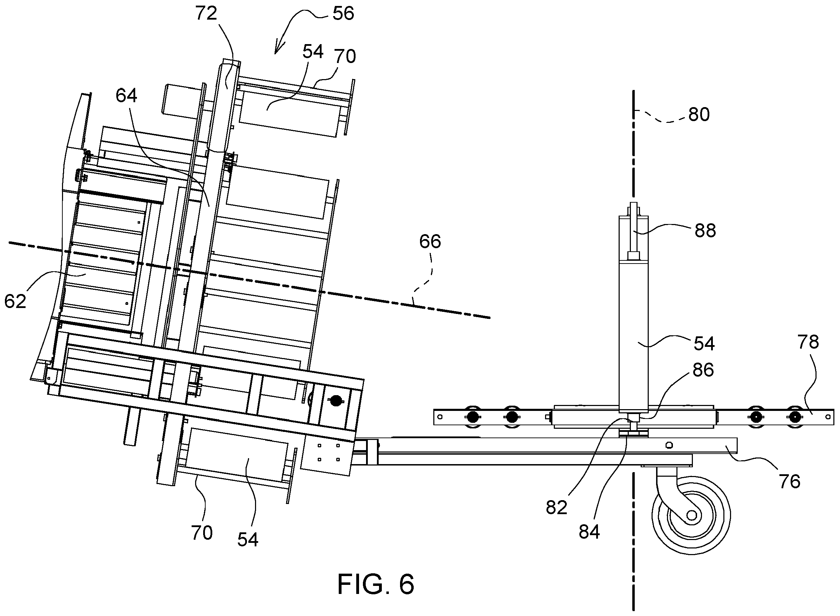

Referring to FIGS. 4-6, the carriage 76 includes a tray 78. The tray 78 is positioned immediately rearward of the bale chute 62 relative to the direction of travel of the baler implement 20. The tray 78 is positioned to receive the bale 30 from the baling chamber 28 and the bale chute 62 in the first orientation. As noted above, the first orientation of the bale 30 is defined as a position of the bale 30 relative to the baler implement 20 in which the central longitudinal bale axis 34 of the bale 30 is generally parallel with the longitudinal frame axis 24. In other words, in the implementation described herein, the long dimension of the bale 30 extends parallel with the direction of travel of the baler implement 20 and parallel with the direction of movement of the bale 30 within the baling chamber 28 during formation of the bale 30.

The tray 78 is rotatable relative to the carriage 76 about a substantially vertical tray axis 80. As such, the tray 78 rotates on a substantially horizontal plane. The tray 78 is rotatable to move the bale 30 from the first orientation to a second orientation. The second orientation is generally defined as a position of the bale 30 rotated approximately ninety degrees (90°) from the first orientation on a horizontal plane, or such that the transverse bale axis 36 is generally parallel with the longitudinal frame axis 24 and the central longitudinal bale axis 34 is substantially perpendicular or transverse to the longitudinal frame axis 24.

The carriage 76 may include an actuator 82 that rotatably interconnects the tray 78 and the carriage 76. The actuator 82 is operable to rotate the tray 78 about the vertical tray axis 80 relative to the carriage 76. The actuator 82 may include, but is not limited to, an electric motor, a hydraulic motor, a pneumatic drive, etc. Additionally, it should be appreciated that the actuator 82 may include all gears, bearings, races, shafts, etc. necessary to rotatably support and rotate the tray 78 relative to the carriage 76. The specific configuration and operation of the actuator 82 and the components thereof are not pertinent to the teachings of the disclosure, are understood by those skilled in the art, and are therefore not described in detail herein.

The transverse wrapping assembly is rotatably attached to the carriage 76 and moveable along a path surrounding the tray 78. The transverse wrapping assembly includes an arm 84 that is rotatably attached to the carriage 76 for rotation about the vertical tray axis 80. A rotational drive 86 may rotatably interconnect the arm 84 and the carriage 76. The rotational drive 86 is operable to move the arm 84 about the vertical tray axis 80 relative to the carriage 76. For each bale 30 wrapped by the transverse wrapping assembly, the tray 78 may rotate approximately ninety degrees about the vertical tray axis 80 to move the bale 30 from the first orientation to the second orientation, whereas the arm 84 may rotate one or more full rotations about the vertical tray axis 80. As such, the arm 84 moves independent of and relative to the tray 78 about the vertical tray axis 80.

The rotational drive 86 may include, but is not limited to, an electric motor, a hydraulic motor, a pneumatic drive, etc. Additionally, it should be appreciated that the rotational drive 86 may include all gears, bearings, races, shafts, etc. necessary to rotatably support and rotate the arm 84 relative to the carriage 76 and/or the tray 78. In one implementation, the rotational drive 86 and the actuator 82 are separate from each other and operate independently of each other. In other implementations, it is contemplated that the rotational drive 86 and the actuator 82 may be combined into a single manufacture, and selectively controlled to move only the tray 78, only the arm 84, or both the tray 78 and the arm 84 simultaneously. The specific configuration and operation of the rotational drive 86 and the components thereof are not pertinent to the teachings of the disclosure, are understood by those skilled in the art, and are therefore not described in detail herein.

The transverse wrapping assembly includes transverse face wrap roller 88. The transverse face wrap roller 88 is attached to and supported on a distal end of the arm 84. The transverse face wrap roller 88 is moveable in an endless loop encircling the tray 78 about the vertical tray axis 80. The transverse face wrap roller 88 is operable to hold a roll of wrap material 54 and wrap the forward end face 50 and the rearward end face 52 of the bale 30 with the wrap material 54 as the transverse face wrap roller 88 moves around the tray 78. It should be appreciated that in addition to wrapping the forward end face 50 and the rearward end face 52 of the bale 30, the transverse wrapping assembly will further wrap the left side face 42 and the right side face 44 of the bale 30.

The transverse face wrap roller 88 may further include a wrap cutter 74 attached to and moveable with the arm 84. The wrap cutter 74 is disposed adjacent to the transverse face wrap roller 88, and is operable to secure and cut the wrap material 54 dispensed from the transverse face wrap roller 88.

In the implementation of the tray 78 shown in the Figures and described herein, the tray 78 includes a central portion 90 concentrically located about the vertical tray axis 80. In the example implementation, the central portion 90 defines a generally square shape, and includes a plurality of omni-direction rollers 68. The omni-directional rollers 92 are operable to guide the bale 30 along both a first path 94 and a second path 96. The second path 96 is disposed perpendicular to the first path 94.

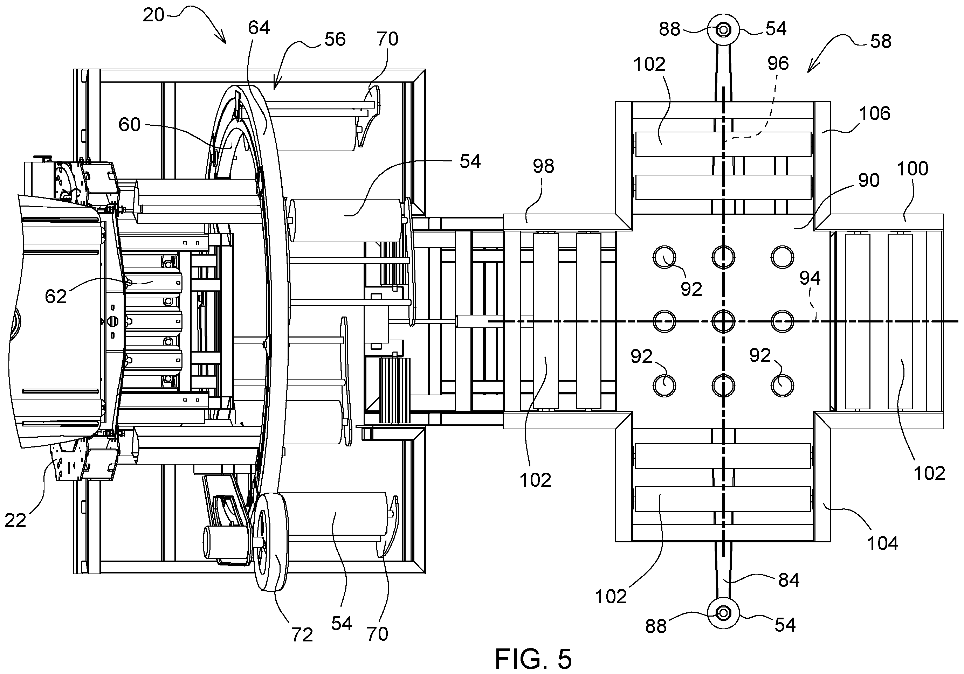

Referring to FIG. 5, the example implementation of the tray 78 is shown. It should be appreciated that the shape and configuration of the tray 78 may differ from the example implementation shown in the Figures and described herein. The tray 78 includes a first wing portion 98 and a second wing portion 100. Both the first wing portion 98 and the second wing portion 100 extend from a respective side of the square shape of the central portion 90. Additionally, both the first wing portion 98 and the second wing portion 100 are coplanar with the central portion 90 of the tray 78. The first wing portion 98 and the second wing portion 100 are disposed opposite each other, across the vertical tray axis 80 from each. Each of the first wing portion 98 and the second wing portion 100 include at least one respective cylindrical guide roller 102 orientated to guide the bale 30 along the first path 94. The respective cylindrical guide roller 102 of the first wing portion 98 and the second wing portion 100 rotate about respective central axes that are generally perpendicular to the vertical tray axis 80.

The tray 78 further includes a third wing portion 104 and a fourth wing portion 106. Both the third wing portion 104 and the fourth wing portion 106 extend from a respective side of the square shape of the central portion 90. Additionally, both the third wing portion 104 and the fourth wing portion 106 are coplanar with the central portion 90 of the tray 78. The third wing portion 104 and the fourth wing portion 106 are disposed opposite each other, across the vertical tray axis 80 from each. Each of the third wing portion 104 and the fourth wing portion 106 include at least one respective cylindrical guide roller 102 orientated to guide the bale 30 along the second path 96. The respective cylindrical guide roller 102 of the third wing portion 104 and the fourth wing portion 106 rotate about respective central axes that are perpendicular to the vertical tray axis 80.

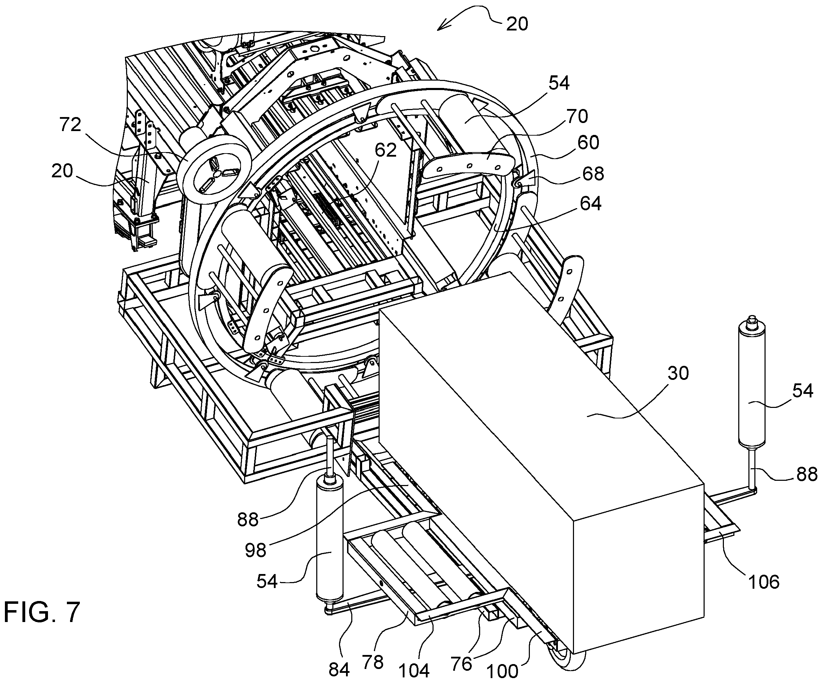

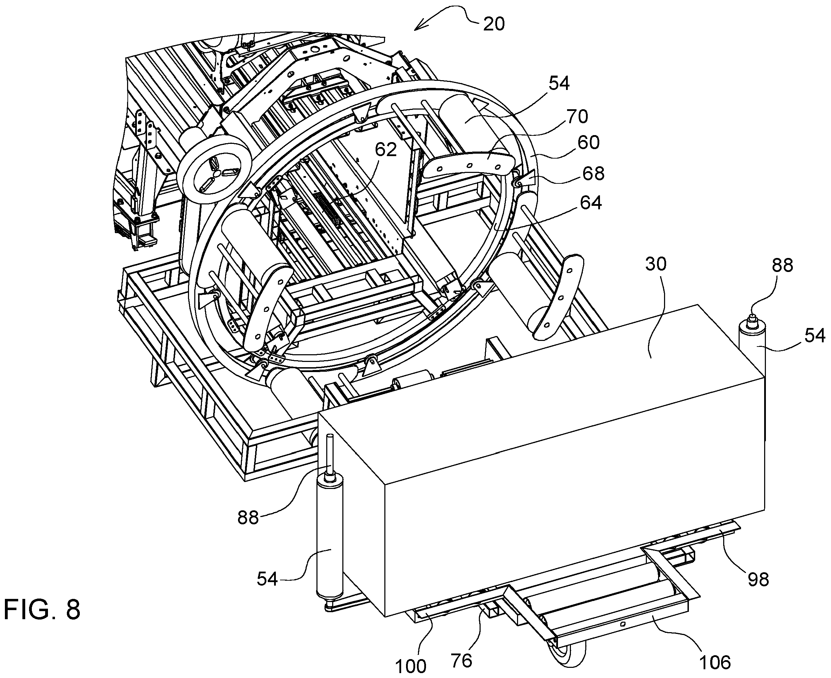

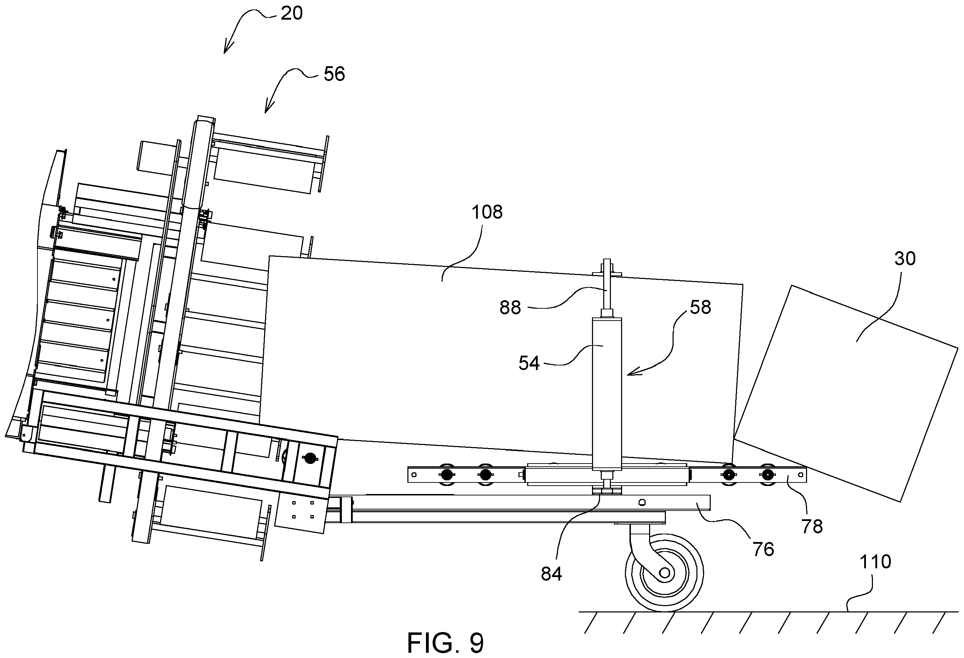

In operation, the bale 30 is discharged from the bale chute 62 onto the tray 78 in the first orientation. As shown in FIG. 5, the first wing portion 98 and the second wing portion 100 are aligned with, i.e., parallel to, the longitudinal frame axis 24. As shown in FIG. 7, the bale 30 may be discharged from the bale chute 62 in the first orientation onto the first wing portion 98 and the second wing portion 100 following the first path 94. As shown in FIG. 8, the tray 78 may then be rotated ninety degrees (90°) to position the bale 30 in the second orientation. As shown in FIG. 8, with the bale 30 disposed in the second position, the third wing portion 104 and the fourth wing portion 106 are aligned with, i.e., parallel to, the longitudinal frame axis 24. As shown in FIG. 9, a second bale 108 may be discharged from the bale chute 62 in the first orientation onto the third wing portion 104 and the fourth wing portion 106. The process of conveying the second bale 108 onto the tray 78 in the first orientation, pushes the original bale 30 off of the tray 78 and onto the ground surface 110, and leaves the second bale 108 positioned in the first orientation on the third wing portion 104 and the fourth wing portion 106. The tray 78 may then be rotated another ninety degrees (90°) to position the second bale 108 in the second orientation, which re-positions the first wing portion 98 and the second wing portion 100 in alignment with, i.e., parallel to, the longitudinal frame axis 24 for receiving a subsequent bale 30.

A method of baling crop material is also provided. The method includes forming the bale 30 within the baling chamber 28 of the baler implement 20. As described above, the bale 30 is formed to include the parallelepiped shape having the left side face 42, the right side face 44, the top face 46, the bottom face 48, the forward end face 50, and the rearward end face 52. Once the bale 30 is formed in the baling chamber 28, the bale 30 is bound with tine to secure the flakes of the bale 30 together, after which, the bale 30 is pushed out of the baling chamber 28 and onto the bale chute 62 in the first orientation. As noted above, when disposed in the first orientation, the central longitudinal bale axis 34 is aligned or parallel with the longitudinal frame axis 24 of the baler implement 20.

As the bale 30 is conveyed down the bale chute 62, the longitudinal faces of the bale 30 are wrapped with the longitudinal wrapping system 56. As noted above, the longitudinal faces of the bale 30 include the left side face 42, the right side face 44, the top face 46, and the bottom face 48 of the bale 30. Wrapping the longitudinal faces of the bale 30 includes rotating the orbital support 64 about the wrap axis 66 to unwind the wrap material 54 from the longitudinal face wrap roller 70 onto the bale 30 as the bale 30 moves along the bale chute 62 in the first orientation.

The bale 30 is conveyed on the bale chute 62 along the longitudinal frame axis 24 of the baler implement 20 onto the tray 78, whereby the bale 30 is disposed on the tray 78 in the first orientation. The tray 78 is then rotated approximately ninety degrees (90°) with the bale 30 disposed thereon to present the bale 30 in the second orientation in which the central longitudinal bale axis 34 of the bale 30 is substantially perpendicular with the longitudinal frame axis 24.

After the bale 30 is positioned in the second orientation, the transverse faces of the bale 30 are wrapped with the transverse wrapping system 58. As noted above, the transverse faces of the bale 30 include the forward end face 50 and the rearward end face 52. Wrapping the transverse faces of the bale 30 includes rotating the arm 84 about the vertical tray axis 80 relative to the tray 78 to move the transverse face wrap roller 88 around the bale 30 and unwind the wrap material 54 from the transverse face wrap roller 88 onto the bale 30. It should be appreciated that rotating the bale 30 from the first orientation to the second orientation allows the transverse face wrap roller 88 to move between the bale 30 and the bale chute 62, thereby enabling the transverse wrapping system 58 to rotate around the bale 30 without interference.

After the transverse faces of the bale 30 have been wrapped, and with the bale 30 in the second orientation, the bale 30 may then be discharged from the tray 78 and onto the ground surface 110. A subsequent or second bale 108 may be used to discharge the bale 30 from the tray 78, when the bale 30 is disposed in the second orientation. The second bale 108 is formed in the baling chamber 28, bound with the tine, and conveyed along the bale chute 62 in the first orientation during which the longitudinal faces of the second bale 108 are wrapped with the longitudinal wrapping system 56 as described above. As the second bale 108 is conveyed onto the tray 78 in the first orientation, the second bale 108 pushes the initial bale 30, which is disposed in the second orientation, off of the rearward edge of the tray 78 and onto the ground surface 110.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A crop baler implement comprising:
a frame (22) extending along a longitudinal frame axis (24);
a baling chamber (28) attached to the frame (22) and sized to form crop material into a bale having a parallelepiped shape extending along a central longitudinal bale axis (34) and having a transverse bale axis (36) perpendicular to the central longitudinal bale axis (34);
a carriage (76) coupled to the frame (22) rearward of the baling chamber (28) and including a tray (78) positioned to receive the bale (30) from the baling chamber (28) in a first orientation, wherein the tray (78) is rotatable relative to the carriage (76) about a vertical tray axis (80) to move the bale (30) from the first orientation to a second orientation, wherein the tray (78) positions the bale (30) such that the central longitudinal bale axis (34) is generally parallel with the longitudinal frame axis (24) when the bale (30) is disposed in the first orientation, and wherein the tray (78) positions the bale (30) such that the transverse bale axis (36) is generally parallel with the longitudinal frame axis (24) when the bale (30) is disposed in the second orientation, the crop baler implement further comprising a longitudinal wrapping assembly coupled to the frame (22) between the tray (78) and the baling chamber (28), wherein the longitudinal wrapping assembly includes longitudinal face wrap roller (70) moveable in an endless loop encircling the bale (30) when the bale (30) is disposed in the first orientation,
**characterized in that**
the crop baler implement comprising a transverse wrapping assembly (58) attached to the carriage (76) and moveable along a path surrounding the tray (78), wherein the transverse wrapping assembly (58) includes transverse face wrap roller (88) moveable in an endless loop encircling the tray (78) when the bale (30) is disposed in the second orientation.

2. The crop baler implement set forth in claim 1, wherein the bale (30) includes a left side face (42), a right side face (44), a top face (46), a bottom face (48), a forward end face (50), and a rearward end face (52), with each of the left side face (42), the right side face (44), the top face (46), and the bottom face (48) are disposed parallel with the central longitudinal bale axis (34), and with each of the forward end face (50) and the rearward end face (52) are disposed parallel to the transverse bale axis (36), and wherein the longitudinal face wrap roller (70) is operable to hold a roll of wrap material (54) and wrap the left side face (42), the right side face (44), the top face (46), and the bottom face (48) of the bale (30) with the wrap material (54) as the longitudinal face wrap roller (70) moves in the endless loop around the bale (30).

3. The crop baler implement according to at least one of the claims 1 to 2, wherein the transverse face wrap roller (88) is operable to hold a roll of wrap material (54) and wrap the forward end face (50) and the rearward end face (52) of the bale (30) with the wrap material (54) as the transverse face wrap roller (88) moves around the tray (78).

4. The crop baler implement according to at least one of the claims 1 to 3, wherein the tray (78) includes a central portion (90) concentrically located about the vertical tray axis (80).

5. The crop baler implement according to claim 4, wherein the central portion (90) includes a plurality of omni-direction rollers (68) operable to guide the bale (30) along both a first path (94) and a second path (96), wherein the second path (96) is disposed perpendicular to the first path (94).

6. The crop baler implement according to at least one of the claims 4 to 5, wherein the central portion (90) defines a square shape.

7. The crop baler implement according to at least one of the claims 4 to 6, wherein the tray (78) includes a first wing portion (98) and a second wing portion (100) extending from and coplanar with the central portion (90), with the first wing portion (98) and the second wing portion (100) disposed opposite each other.

8. The crop baler implement according to at least one of the claims 4 to 7, wherein the tray (78) includes a third wing portion (104) and a fourth wing portion (106) extending from and coplanar with the central portion (90), with the third wing portion (104) and the fourth wing portion (106) disposed opposite each other.

9. The crop baler implement according to at least one of the claims 1 to 8, further comprising an arm (84) supporting the transverse face wrap roller (88) and rotatably attached to the carriage (76) for rotation about the vertical tray axis (80).

10. The crop baler implement according to claim 9, further comprising a rotational drive (86) interconnecting the arm (84) and the carriage (76) and operable to move the arm (84) about the vertical tray axis (80) relative to the carriage (76).

11. The crop baler implement according to at least one of the claims 9 to 10, wherein the arm (84) moves independent of and relative to the tray (78) about the vertical tray axis (80).

12. The crop baler implement according to at least one of the claims 1 to 11, further comprising an actuator (82) interconnecting the tray (78) and the carriage (76) and operable to rotate the tray (78) about the vertical tray axis (80) relative to the carriage (76).

13. A method of baling crop material, the method comprising:
forming a bale (30) within a baling chamber (28) of a baler implement, wherein the bale (30) is formed to include a left side face (42), a right side face (44), a top face (46), a bottom face (48), a forward end face (50), and a rearward end face (52), wherein each of the left side face (42), the right side face (44), the top face (46), and the bottom face (48) are disposed parallel with a central longitudinal bale axis (34), and wherein each of the forward end face (50) and the rearward end face (52) are disposed transverse to the central longitudinal bale axis (34);
wrapping the left side face (42), the right side face (44), the top face (46), and the bottom face (48) of the bale (30) with a wrap material (54) from a roll of wrap material (54) supported on a longitudinal face wrap roller (70) as the bale (30) is discharged from the baling chamber (28);
conveying the bale (30) along a longitudinal frame axis (24) of the baler implement onto a tray (78), whereby the bale (30) is disposed in a first orientation on the tray (78) in which the central longitudinal bale axis (34) of the bale (30) is parallel with the longitudinal frame axis (24); rotating the tray (78) with the bale (30) disposed thereon to present the bale (30) in a second orientation in which the central longitudinal bale axis (34) of the bale (30) is perpendicular with the longitudinal frame axis (24);
wrapping the forward end face (50) and the rearward end face (52) of the bale (30) with a wrap material (54) from a roll of wrap material (54) supported on a transverse face wrap roller (88) when the bale (30) is disposed in the second orientation; and
discharging the bale (30) from the tray (78) and onto a ground surface from the second orientation after the forward end face (50) and the rearward end face (52) have been wrapped with the wrap material (54).

## Patentansprüche

1. Erntegutballenpressengerät, umfassend:
einen Rahmen (22), der sich entlang einer Rahmenlängsachse (24) erstreckt;
eine Ballenbildungskammer (28), die am Rahmen (22) befestigt und dazu dimensioniert ist, Erntegutmaterial in einen Ballen zu formen, der eine Parallelepipedform aufweist, die sich entlang einer mittigen Ballenlängsachse (34) erstreckt, und eine Ballenquerachse (36) aufweist, die senkrecht zur mittigen Ballenlängsachse (34) verläuft;
einen Schlitten (76), der hinter der Ballenbildungskammer (28) mit dem Rahmen (22) gekoppelt ist und eine Ablage (78) umfasst, die dazu positioniert ist, den Ballen (30) von der Ballenbildungskammer (28) in einer ersten Orientierung aufzunehmen, wobei die Ablage (78) in Bezug zum Schlitten (76) um eine vertikale Ablagenachse (80) drehbar ist, um den Ballen (30) von der ersten Orientierung in eine zweite Orientierung zu bewegen, wobei die Ablage (78) den Ballen (30) derart positioniert, dass die mittige Ballenlängsachse (34) im Allgemeinen parallel zur Rahmenlängsachse (24) ist, wenn der Ballen (30) in der ersten Orientierung angeordnet ist, und wobei die Ablage (78) den Ballen (30) derart positioniert, dass die Ballenquerachse (36) im Allgemeinen parallel zur Rahmenlängsachse (24) ist, wenn der Ballen (30) in der zweiten Orientierung angeordnet ist, wobei das Erntegutballenpressengerät ferner eine Längswickelanordnung umfasst, die zwischen der Ablage (78) und der Ballenbildungskammer (28) mit dem Rahmen (22) gekoppelt ist, wobei die Längswickelanordnung eine Längsseitenwickelrolle (70) umfasst, die in einer Endlosschleife den Ballen (30) umkreisend beweglich ist, wenn der Ballen (30) in der ersten Orientierung angeordnet ist,
**dadurch gekennzeichnet, dass**
das Erntegutballenpressengerät eine Querwickelanordnung (58) umfasst, die am Schlitten (76) befestigt und entlang einer die Ablage (78) umgebenden Bahn beweglich ist, wobei die Querwickelanordnung (58) eine Querseitenwickelrolle (88) umfasst, die in einer Endlosschleife die Ablage (78) umkreisend beweglich ist, wenn der Ballen (30) in der zweiten Orientierung angeordnet ist.

2. Erntegutballenpressengerät nach Anspruch 1, wobei der Ballen (30) eine linke Seite (42), eine rechte Seite (44), eine Oberseite (46), eine Unterseite (48), eine Vorderseite (55) und eine Rückseite (52) umfasst, wobei die linke Seite (42), die rechte Seite (44), die Oberseite (46) und die Unterseite (48) parallel zur mittigen Ballenlängsachse (34) angeordnet sind und wobei die Vorderseite (50) und die Rückseite (52) parallel zur Ballenquerachse (36) angeordnet sind und wobei die Längsseitenwickelrolle (70) dazu funktionsfähig ist, eine Rolle Wickelmaterial (54) zu halten und die linke Seite (42), die rechte Seite (44), die Oberseite (46) und die Unterseite (48) des Ballens (30) mit dem Wickelmaterial (54) zu umwickeln, während sich die Längsseitenwickelrolle (70) in einer Endlosschleife um den Ballen (30) herum bewegt.

3. Erntegutballenpressengerät nach mindestens einem der Ansprüche 1 bis 2, wobei die Querseitenwickelrolle (88) dazu funktionsfähig ist, eine Rolle Wickelmaterial (54) zu halten und die Vorderseite (20) und die Rückseite (52) des Ballens (30) mit dem Wickelmaterial (54) zu umwickeln, während sich die Querseitenwickelrolle (88) um die Ablage (78) herum bewegt.

4. Erntegutballenpressengerät nach mindestens einem der Ansprüche 1 bis 3, wobei die Ablage (78) einen Mittelabschnitt (90) umfasst, der konzentrisch um die vertikale Ablagenachse (80) angeordnet ist.

5. Erntegutballenpressengerät nach Anspruch 4, wobei der Mittelabschnitt (90) mehrere omnidirektionale Rollen (68) umfasst, die dazu funktionsfähig sind, den Ballen (30) entlang einer ersten Bahn (94) und einer zweiten Bahn (96) zu leiten, wobei die zweite Bahn (96) senkrecht zur ersten Bahn (94) angeordnet ist.

6. Erntegutballenpressengerät nach mindestens einem der Ansprüche 4 bis 5, wobei der Mittelabschnitt (90) eine Quadratform definiert.

7. Erntegutballenpressengerät nach mindestens einem der Ansprüche 4 bis 6, wobei die Ablage (78) einen ersten Flügelabschnitt (98) und einen zweiten Flügelabschnitt (10) umfasst, die sich vom Mittelabschnitt (90) und komplanar dazu erstrecken, wobei der erste Flügelabschnitt (98) und der zweite Flügelabschnitt (100) einander entgegengesetzt angeordnet sind.

8. Erntegutballenpressengerät nach mindestens einem der Ansprüche 4 bis 7, wobei die Ablage (78) einen dritten Flügelabschnitt (104) und einen vierten Flügelabschnitt (106) umfasst, die sich vom Mittelabschnitt (90) und komplanar dazu erstrecken, wobei der dritte Flügelabschnitt (104) und der vierte Flügelabschnitt (106) einander entgegengesetzt angeordnet sind.

9. Erntegutballenpressengerät nach mindestens einem der Ansprüche 1 bis 8, ferner umfassend einen Arm (84), der die Querseitenwickelrolle (88) lagert und zur Drehung um die vertikale Ablagenachse (80) drehbar am Schritten (76) befestigt ist.

10. Erntegutballenpressengerät nach Anspruch 2, ferner umfassend einen Drehantrieb (86), der den Arm (84) mit dem Schlitten (76) verbindet und dazu funktionsfähig ist, den Arm (84) in Bezug zum Schlitten (76) um die vertikale Ablagenachse (80) zu bewegen.

11. Erntegutballenpressengerät nach mindestens einem der Ansprüche 9 bis 10, wobei sich der Arm (84) unabhängig von und in Bezug zur Ablage (78) um die vertikale Ablagenachse (80) bewegt.

12. Erntegutballenpressengerät nach mindestens einem der Ansprüche 1 bis 11, ferner umfassend ein Stellglied (82), das die Ablage (78) mit dem Schlitten (76) verbindet und dazu funktionsfähig ist, die Ablage (78) in Bezug zum Schlitten (76) um die vertikale Ablagenachse (80) zu drehen.

13. Verfahren zur Ballenbildung von Erntegutmaterial, das Verfahren umfassend:
Ausbilden eines Ballens (30) innerhalb einer Ballenbildungskammer (28) eines Ballenpressengeräts, wobei der Ballen (30) ausgebildet ist, um eine linke Seite (42), eine rechte Seite (44), eine Oberseite (46), eine Unterseite (48), eine Vorderseite (50) und eine Rückseite (52) aufzuweisen, wobei die linke Seite (42), die rechte Seite (44), die Oberseite (46) und die Unterseite (48) parallel zu einer mittigen Ballenlängsachse (34) angeordnet sind und wobei die Vorderseite (50) und die Rückseite (52) quer zur mittigen Ballenlängsachse (34) angeordnet sind;
Umwickeln der linken Seite (42), der rechten Seite (44), der Oberseite (46) und der Unterseite (48) des Ballens (30) mit einem Wickelmaterial (54) von einer Rolle Wickelmaterial (54), die auf einer Längsseitenwickelrolle (70) gelagert wird, während der Ballen (30) aus der Ballenbildungskammer (28) ausgeworfen wird;
Befördern des Ballens (30) entlang einer Rahmenlängsachse (24) des Ballenpressengeräts auf eine Ablage (78), wobei der Ballen (30) in einer ersten Orientierung auf der Ablage (78) angeordnet ist, in welcher die mittige Ballenlängsachse (34) des Ballens (30) parallel zur Rahmenlängsachse (24) ist;
Drehen der Ablage (78) mit dem darauf angeordneten Ballen (30), um den Ballen (30) in eine zweite Orientierung zu bringen, in welcher die mittige Ballenlängsachse (34) des Ballens (30) senkrecht zur Rahmenlängsachse (24) ist;
Umwickeln der Vorderseite (50) und der Rückseite (52) des Ballens (30) mit einem Wickelmaterial von einer Rolle Wickelmaterial (54), die auf einer Querseitenwickelrolle (88) gelagert wird, wenn der Ballen (30) in der zweiten Orientierung angeordnet ist; und
Auswerfen des Ballens (30) von der Ablage (78) und auf eine Bodenfläche aus der zweiten Orientierung, nachdem die Vorderseite (50) und die Rückseite (52) mit dem Wickelmaterial (54) umwickelt wurden.

## Revendications

1. Outil de ramasseuse-presse de récolte comprenant :
un châssis (22) s'étendant le long d'un axe de châssis longitudinal (24) ;
une chambre de mise en balle (28) fixée au châssis (22) et dimensionnée pour former un matériau de récolte en une balle ayant une forme parallélépipédique s'étendant le long d'un axe de balle longitudinal central (34) et ayant un axe de balle transversal (36) perpendiculaire à l'axe de balle longitudinal central (34) ;
un chariot (76) accouplé au châssis (22) à l'arrière de la chambre de mise en balle (28) et comprenant un plateau (78) positionné pour recevoir la balle (30) provenant de la chambre de mise en balle (28) dans une première orientation, le plateau (78) pouvant tourner par rapport au chariot (76) autour d'un axe de plateau vertical (80) pour déplacer la balle (30) de la première orientation à une seconde orientation, le plateau (78) positionnant la balle (30) de sorte que l'axe de balle longitudinal central (34) soit généralement parallèle à l'axe de châssis longitudinal (24) lorsque la balle (30) est disposée dans la première orientation, et le plateau (78) positionnant la balle (30) de sorte que l'axe de balle transversal (36) soit généralement parallèle à l'axe de châssis longitudinal (24) lorsque la balle (30) est disposée dans la seconde orientation, l'outil de ramasseuse-presse de récolte comprenant en outre un ensemble d'emballage longitudinal accouplé au châssis (22) entre le plateau (78) et la chambre de mise en balle (28), l'ensemble d'emballage longitudinal comprenant un rouleau d'emballage de faces longitudinales (70) mobile dans une boucle sans fin encerclant la balle (30) lorsque la balle (30) est disposée dans la première orientation,
**caractérisé en ce que**
l'outil de ramasseuse-presse de récolte comprend un ensemble d'emballage transversal (58) fixé au chariot (76) et mobile le long d'un chemin entourant le plateau (78), l'ensemble d'emballage transversal (58) comprenant un rouleau d'emballage de face transversal (88) mobile dans une boucle sans fin encerclant le plateau (78) lorsque la balle (30) est disposée dans la seconde orientation.

2. Outil de ramasseuse-presse de récolte selon la revendication 1, la balle (30) comprenant une face latérale gauche (42), une face latérale droite (44), une face supérieure (46), une face inférieure (48), une face d'extrémité avant (50) et une face d'extrémité arrière (52), chacune de la face latérale gauche (42), de la face latérale droite (44), de la face supérieure (46) et de la face inférieure (48) étant disposée parallèlement à l'axe de balle longitudinal central (34), et chacune de la face d'extrémité avant (50) et de la face d'extrémité arrière (52) étant disposée parallèlement à l'axe de balle transversal (36), et le rouleau d'emballage de faces longitudinales (70) pouvant tenir un rouleau de matériau d'emballage (54) et emballer la face latérale gauche (42), la face latérale droite (44), la face supérieure (46) et la face inférieure (48) de la balle (30) avec le matériau d'emballage (54) lorsque le rouleau d'emballage de faces longitudinales (70) se déplace dans la boucle sans fin autour de la balle (30).

3. Outil de ramasseuse-presse de récolte selon au moins l'une des revendications 1 à 2, le rouleau d'emballage de faces transversales (88) pouvant tenir un rouleau de matériau d'emballage (54) et emballer la face d'extrémité avant (50) et la face d'extrémité arrière (52) de la balle (30) avec le matériau d'emballage (54) lorsque le rouleau d'emballage de faces transversales (88) se déplace autour du plateau (78).

4. Outil de ramasseuse-presse de récolte selon au moins l'une des revendications 1 à 3, le plateau (78) comprenant une partie centrale (90) située de manière concentrique autour de l'axe de plateau vertical (80).

5. Outil de ramasseuse-presse de récolte selon la revendication 4, la partie centrale (90) comprenant une pluralité de rouleaux omnidirectionnels (68) pouvant guider la balle (30) le long d'un premier chemin (94) et d'un second chemin (96), le second chemin (96) étant disposé perpendiculairement au premier chemin (94).

6. Outil de ramasseuse-presse de récolte selon au moins l'une des revendications 4 à 5, la partie centrale (90) définissant une forme carrée.

7. Outil de ramasseuse-presse de récolte selon au moins l'une des revendications 4 à 6, le plateau (78) comprenant une première partie d'aile (98) et une deuxième partie d'aile (100) s'étendant depuis de la partie centrale (90) et coplanaire avec celle-ci, la première partie d'aile (98) et la deuxième partie d'aile (100) étant disposées à l'opposé l'une de l'autre.

8. Outil de ramasseuse-presse de récolte selon au moins l'une des revendications 4 à 7, le plateau (78) comprenant une troisième partie d'aile (104) et une quatrième partie d'aile (106) s'étendant depuis de la partie centrale (90) et coplanaire avec celle-ci, la troisième partie d'aile (104) et la quatrième partie d'aile (106) étant disposées à l'opposé l'une de l'autre.

9. Outil de ramasseuse-presse de récolte selon au moins l'une des revendications 1 à 8, comprenant en outre un bras (84) supportant le rouleau d'emballage de faces transversales (88) et fixé de manière rotative au chariot (76) pour tourner autour de l'axe de plateau vertical (80) .

10. Outil de ramasseuse-presse de récolte selon la revendication 9, comprenant en outre un entraînement rotatif (86) reliant le bras (84) et le chariot (76) et pouvant déplacer le bras (84) autour de l'axe de plateau vertical (80) par rapport au chariot (76).

11. Outil de ramasseuse-presse de récolte selon au moins l'une des revendications 9 à 10, le bras (84) se déplaçant indépendamment du plateau (78) et par rapport à celui-ci autour de l'axe de plateau vertical (80).

12. Outil de ramasseuse-presse de récolte selon au moins l'une des revendications 1 à 11, comprenant en outre un actionneur (82) reliant le plateau (78) et le chariot (76) et pouvant faire tourner le plateau (78) autour de l'axe de plateau vertical (80) par rapport au chariot (76) .

13. Procédé de mise en balle de matériau de récolte, le procédé comprenant les étapes consistant à :
former une balle (30) dans une chambre de mise en balle (28) d'un outil de ramasseuse-presse, la balle (30) étant formée pour inclure une face latérale gauche (42), une face latérale droite (44), une face supérieure (46), une face inférieure (48), une face d'extrémité avant (50), et une face d'extrémité arrière (52), chacune de la face latérale gauche (42), de la face latérale droite (44), de la face supérieure (46) et de la face inférieure (48) étant disposée parallèlement à un axe de balle longitudinal central (34), et chacune de la face d'extrémité avant (50) et de la face d'extrémité arrière (52) étant disposée transversalement à l'axe de balle longitudinal central (34) ;
emballer la face latérale gauche (42), la face latérale droite (44), la face supérieure (46) et la face inférieure (48) de la balle (30) avec un matériau d'emballage (54) provenant d'un rouleau de matériau d'emballage (54) soutenu par un rouleau d'emballage de faces longitudinales (70) lorsque la balle (30) est déchargée de la chambre de mise en balle (28) ;
transporter la balle (30) le long de l'axe de châssis longitudinal (24) de l'outil de ramasseuse-presse sur un plateau (78), moyennant quoi la balle (30) est disposée dans une première orientation sur le plateau (78) dans laquelle l'axe de balle longitudinal central (34) de la balle (30) est parallèle à l'axe de châssis longitudinal (24) ;
faire tourner le plateau (78) avec la balle (30) disposée dessus pour présenter la balle (30) dans une seconde orientation dans laquelle l'axe de balle longitudinal central (34) de la balle (30) est perpendiculaire à l'axe de châssis longitudinal (24) ;
emballer la face d'extrémité avant (50) et la face d'extrémité arrière (52) de la balle (30) avec un matériau d'emballage (54) provenant d'un rouleau de matériau d'emballage (54) supporté sur un rouleau d'emballage de faces transversales (88) lorsque la balle (30) est disposée dans la seconde orientation ; et décharger la balle (30) du plateau (78) et sur une surface au sol depuis de la seconde orientation après que la face d'extrémité avant (50) et la face d'extrémité arrière (52) ont été emballées avec le matériau d'emballage (54).
